(19) Europäisches Patentamt

European Patent Office

Office européen des brevets

(11) Veröffentlichungsnummer: **0 448 932 B1**

(12) **EUROPÄISCHE PATENTSCHRIFT**

(45) Veröffentlichungstag der Patentschrift: **02.11.94**

(21) Anmeldenummer: **91100792.0**

(22) Anmeldetag: **23.01.91**

(51) Int. Cl.5: **B27K 3/50**

(54) **Mittel oder Konzentrat zum Schutz von Schnittholz gegen holzverfärbende Pilze.**

(30) Priorität: **27.03.90 DE 4009740**

(43) Veröffentlichungstag der Anmeldung:
**02.10.91 Patentblatt 91/40**

(45) Bekanntmachung des Hinweises auf die
Patenterteilung:
**02.11.94 Patentblatt 94/44**

(84) Benannte Vertragsstaaten:
**AT BE CH DE DK ES FR GB GR IT LI LU NL SE**

(56) Entgegenhaltungen:
**EP-A- 0 147 976**
**EP-A- 0 148 526**
**EP-A- 0 316 602**
**DE-A- 3 743 821**
**FR-A- 2 523 404**

**CENTRAL PATENTS INDEX, BASIC AB-
STRACTS JOURNAL, Woche E07, 14. April
1982, Sektion C: AGDOC, Accession Nr.
13054 E/07, Derwent Publications Ltd, London, GB**

(73) Patentinhaber: **DESOWAG Materialschutz
GmbH
Postfach 32 02 20,
Rossstrasse 76
D-40417 Düsseldorf (DE)**

(72) Erfinder: **Hellwig, Volker, Dr.
Thiergartenstrasse 15
W-4150 Krefeld 1 (DE)**
Erfinder: **Hiller, Johannes Christian, Dr.
Vinhoverweg 50
W-4044 Kaarst (DE)**

(74) Vertreter: **Lauer, Dieter, Dr.
c/o Solvay Deutschland GmbH
Hans-Böckler-Allee 20
D-30173 Hannover (DE)**

**Beschreibung**

Die vorliegende Erfindung betrifft ein Mittel oder Konzentrat zum Schutz von Schnittholz gegen holzverfärbende Pilze.

Feuchtes Holz, insbesondere frisch gesägtes Schnittholz, wird in feuchtem Zustand von holzverfärbenden Pilzen (Bläuepilzen und Schimmelpilzen) befallen, wodurch eine Wertminderung des Holzes hervorgerufen wird. Es ist daher erforderlich, eine Schutzbehandlung des Holzes durchzuführen.

Es ist bereits bekannt (DE-OS 33 08 303), daß 2-Ethylhexansäure eine fungizide Wirksamkeit aufweist. Eigene durchgeführte Versuche ergaben indessen, daß die Wirksamkeit gegen Bläuepilze ungenügend ist.

Es ist weiterhin bekannt, daß Amine als solche für den Holzschutz nicht brauchbar sind. Eigene durchgeführte Versuche mit Cocosdimethylamin ergaben, daß dessen Wirksamkeit zum Schutz von Holz gegen Bläuebefall ungenügend ist.

In der EP-PA 0147976 werden Aminsalze beschrieben, die in nichtwäßrigen Formulierungen zum Schutz von Cellulose gegen biologischen Abbau verwendet werden. Von einer Schutzwirkung dieser Verbindungen gegen holzverfärbende Pilze ist jedoch in dieser Literaturstelle nichts bekannt. Eigene durchgeführte Versuche ergaben zudem, daß die Wirkung dieser Salze gegen Schimmelbefall des Holzes nicht ausreichend ist.

Überraschenderweise wurde erfindungsgemäß festgestellt, daß eine Kombination von Cocosdimethylamin und 2-Ethylhexansäure mit

C)      1-[[2-(2,4-dichlorphenyl)-1,3-dioxolan-2-yl]methyl]--1H-1,2,4-triazol (common name: Azaconazol),1-[2-(2',4'-dichlorphenyl)-4-propyl-1,3-dioxolan-2-yl]methyl-1H-1,2,4-triazol (common name: Propiconazol) oder α -[2-(4-chlorphenyl)ethyl]-α-(1,1-dimethylethyl)-1H-1,2,4-triazol-1-ethanol (common name: Tebuconazol)

nicht nur zu einer Verhinderung des Befalls von feuchtem Holz, insbesondere von frisch gesägtem Schnittholz, durch holzverfärbende Pilze führt, sondern auch einen zusätzlichen Schutz gegen Schimmelbefall bewirkt.

Das erfindungsgemäße Mittel oder Konzentrat besteht somit aus einem Gemisch von

A)      Cocosdimethylamin und

B)      2-Ethylhexansäure

in einem Verhältnis von

8 : 1 bis 1 : 8, vorzugsweise

2 : 1 bis 1 : 2

sowie

C)      1-[[2-(2,4-dichlorphenyl)-1,3-dioxolan-2-yl]methyl]--1H-1,2,4-triazol,    1-[2-(2',4'-dichlorphenyl)-4-propyl-1,3-dioxolan-2-yl]methyl-1H-1,2,4-triazol oder α -[2-(4-chlorphenyl)ethyl]-α -(1,1-dimethylethyl)-1H-1,2,4-triazol-1-ethanol

und ggf. D) Tris-(N-cyclohexyl-diazeniumdioxi)-aluminium in einem unpolaren und/oder polaren organisch-chemischen Lösemittel oder Lösemittelgemische, vorzugsweise in einem polaren organisch-chemischen Lösemittel oder Lösemittelgemisch oder in einem Gemisches aus unpolaren und polaren organisch-chemischen Lösemitteln oder in einem Gemisches aus Wasser und einem organisch-chemischen Lösemittel oder Lösemittelgemisch, vorzugsweise einem polaren organisch-chemischen Lösemittel oder Lösemittelgemisch und mindestens einem Emulgator und/oder Netzmittel gelöst.

Besonders bevorzugt wird ein Verhältnis der beiden Wirkstoffe A) und B) von 1,5 : 1.

Als unpolare organisch-chemische Lösemittel werden ölige oder ölartige Lösungsmittel wie Mineralöle oder mineralölhaltige Lösungsmittelgemische, Testbenzin, Petroleum und/oder Alkylbenzole, vorzugsweise Aromatenfraktionen der Mineralöle verwendet.

Als polare organisch-chemische Lösemittel werden Hydroxy-, Ether-, Keto- oder Estergruppen enthaltende Lösemittel oder Lösemittelgemische eingesetzt. Vorzugsweise gelangen Cyclohexanon oder Dipropylenglykolmonomethylether zum Einsatz.

Als Emulgatoren werden nichtionogene Emulgatoren oder nichtionogene Emulgatorgemische, vorzugsweise ein eine Seitengruppe enthaltendes ethoryliertes Phenol, besonders bevorzugt ein ethoxyliertes Nonylphenol verwendet. Das nichtionogene Emulgatorgemisch besteht vorteilhaft aus einem Gemisch von nichtionogenen Emulgatoren unterschiedlicher Kettenlänge, von denen ein Emulgator eine ethoxylierte Seitenkette von weniger als 10 Ethoxygruppen und von denen mindestens ein anderer Emulgator eine ethoxylierte Seitenkette von mehr als 10 Ethoxygruppen besitzt.

Das erfindungsgemäße Konzentrat besteht nach einer Ausführungsform aus

30 bis 80 Gew. %, vorzugsweise

50 bis 60 Gew. %

2

des Gemisches von

A) Cocosdimethylamin und

B) 2-Ethylhexansäure

in einem Verhältnis von

8 : 1 bis 1 : 8, vorzugseise

2 : 1 bis 1 : 2

sowie

1 bis 10 Gew. %, vorzugsweise

4 bis 7 Gew. %

C) 1-[[2-(2,4-dichlorphenyl)-1,3-dioxolan-2-yl]methyl]--1H-1,2,4-triazol, 1-[2-(2',4'-dichlorphenyl)-4-propyl-1,3-dioxolan-2-yl]methyl-1H-1,2,4-triazol oder α -[2-(4-chlorphenyl)ethyl]-α-(1,1-dimethylethyl)-1H-1,2,4-triazol-1-ethanol

und

mehr als 9 Gew. %, vorzugsweise

mehr als 32 Gew. %

eines unpolaren und/oder polaren organisch-chemischen Lösemittels oder Lösemittelgemisches, vorzugsweise eines polaren organisch-chemischen Lösemittels oder Lösemittelgemisches oder eines Gemisches aus unpolaren und polaren organisch-chemischen Lösemitteln oder eines Gemisches aus Wasser und einem organisch-chemischen Lösemittel oder Lösemittelgemisch, vorzugsweise einem polaren organischen Lösemittel oder Lösemittelgemisch, und mindestens einem Emulgator und/oder Netzmittel.

Das erfindungsgemäße Mittel (anwendungsfertige Mittel) enthält nach einer Ausführungsform

0,7 bis 6 Gew. %, vorzugsweise

2 bis 5 Gew. %

des Konzentrats, bestehend aus

30 bis 80 Gew. %, vorzugsweise

50 bis 60 Gew. %

des Gemisches von

A) Cocosdimethylamin und

B) 2-Ethylhexansäure

in einem Verhältnis von

8 : 1 bis 1 : 8, vorzugsweise

2 : 1 bis 1 : 2

sowie

1 bis 10 Gew. %, vorzugsweise

4 bis 7 Gew. %

C) 1-[[2-(2,4-dichlorphenyl)-1,3-dioxolan-2-yl]methyl]--1H-1,2,4-triazol, 1-[2-(2',4'-dichlorphenyl)-4-propyl-1,3-dioxolan-2-yl]methyl-1H-1,2,4-triazol oder α-[2-(4-chlorphenyl)ethyl]-α-(1,1-dimethylethyl)-1H-1,2,4-triazol-1-ethanol

und

mehr als 9 Gew. %, vorzugsweise

mehr als 32 Gew. %

eines unpolaren und/oder polaren organisch-chemischen Lösemittels oder Lösemittelgemisches, vorzugsweise eines polaren organisch-chemischen Lösemittels oder Lösemittelgemisches oder eines Gemisches aus unpolaren und polaren organisch-chemischen Lösemitteln oder eines Gemisches aus Wasser und einem organisch-chemischen Lösemittel oder Lösemittelgemisch, vorzugsweise einem polaren organischen Lösemittel oder Lösemittelgemisch, und mindestens einem Emulgator und/oder Netzmittel

sowie

mehr als 93 Gew. %, vorzugsweise

mehr als 94 Gew. %

Wasser.

Das erfindungsgemäß verwendete Cocosdimethylamin ist ein Dimethyl-[$C_{12}C_{14}C_{16}$]-alkylamin, wobei die Alkylkette zusammengesetzt ist aus 68 % $C_{12}$-Alkyl, 29 % $C_{14}$-Alkyl und 3 % $C_{16}$-Alkyl.

Das Schnittholz wird mit dem erfindungsgemäßen Mittel oder Konzentrat derart behandelt, daß auf der Holzoberfläche

0,7 bis 6 g/m$^2$, vorzugsweise

2 bis 5 g/m$^2$

des Mittels oder Konzentrats aufgebracht werden.

3

**Beispiele**

1. Vergleichsbeispiele:

Stammscheibentest

|  | Bläue | Schimmel |
|---|---|---|
| a) Cocosdimethyl-amin | | |
| $0,3$ g/m$^2$ | 3 | 5 |
| $0,8$ g/m$^2$ | 3 – 5 | 5 |
| $1,4$ g/m$^2$ | 3 – 5 | 5 |

|  | Bläue | Schimmel |
|---|---|---|
| b) 2-Ethylhexansäure | | |
| $1,9$ g/m$^2$ | 5 | 5 |
| $4,3$ g/m$^2$ | 3 – 5 | 3 – 5 |

|  | % | g/m$^2$ | Bläue | Schimmel |
|---|---|---|---|---|
| c) 38,95 % 2-Ethylhexansäure | 0,5 | 1,0 | 0 | 5 |
| 61,05 % Dimethylcocosamin | 0,7 | 1,2-1,4 | 0 | 5 |
| | 1,0 | 1,7-2,2 | 0 | 5 |
| | 1,3 | 2,2-3,3 | 0 | 5 |
| | 1,7 | 3,0-3,9 | 0 | 5 |
| | 2,0 | 3,8-4,5 | 0 | 5 |
| | in $H_2O$ | | | 5 |

|  | % | g/m$^2$ | Bläue | Schimmel |
|---|---|---|---|---|
| d) 56 % 2-Ethylhexansäure | 0,5 | 0,8-1,0 | 3 | 5 |
| 44 % Dimethylcocosamin | 1,0 | 1,8-2,1 | 0 | 5 |
|  | 1,7 | 3,2-3,8 | 0 | 5 |
|  | in H$_2$O |  |  | 5 |
|  |  |  |  |  |
| e) 30 % 2- Ethylhexansäure | 0,5 | 0,7-1,1 | 2 | 5 |
| 70 % Dimethylcocosamin | 1,0 | 1,7-2,1 | 0 | 5 |
| gelöst in Wasser | 1,7 | 2,4-3,5 | 0 | 5 |
|  | in H$_2$O |  |  |  |

2. Erfindungsgemäße Beispiele

Stammscheibentest

| a) 19,5 % 2-Ethylhexansäure | 0,5 | 1,1 | 1 - 3 | 5 |
|---|---|---|---|---|
| 30,5 % Dimethylcocosamin | 1,0 | 2,1-2,2 | 0 | 5 |
| 5 % Azaconazol | 2,0 | 4,1-5,2 | 0 | 0 |
| 10 % H$_2$O | 4,0 | 8,9-9,7 | 0 | 0 |
| 15 % Cyclohexanon | in H$_2$O |  |  |  |
| 20 % Emulgator |  |  |  |  |

|  | % | g/m$^2$ | Bläue | Schimmel |
|---|---|---|---|---|
| *b)* 19,5 % 2-Ethylhexansäure | 0,5 | 0,9-1,2 | 1-3 | 5 |
| 30,5 % Dimethylcocosamin | 1,0 | 1,7-2,1 | 0 | 5 |
| 1 % N-CH-AL | 2,0 | 4,2-4,9 | 0 | 0 |
| 2 % Azaconazol | 4,0 | 8,3-9,0 | 0 | 0 |
| 3 % Aromaten |  |  |  |  |
| 6 % Cyclohexanon |  |  |  |  |
| 20 % Emulgator |  |  |  |  |
| 18 % Wasser |  |  |  |  |

N-CH-AL = Tris-(N-cyclohexyl-diazeniumdioxi)-aluminium


<u>Hierbei bedeuten:</u>

| Befallsgrad: | 0 | : | befallsfrei |
|---|---|---|---|
| | 1 | : | max. 10 % der Oberfläche befallen |
| | 2 | : | "    30 %    "    " |
| | 3 | : | "    50 %    "    " |
| | 4 | : | "    80 %    "    " |
| | 5 | : | "    total befallen |


**Patentansprüche**

1. Mittel oder Konzentrat zum Schutz von Schnittholz gegen holzverfärbende Pilze, dadurch gekennzeichnet, daß es aus einer Mischung von
   A)    Cocosdimethylamin und
   B)    2-Ethylhexansäure
   in einem Verhältnis von
   8 : 1 bis 1 : 8, vorzugsweise
   2 : 1 bis 1 : 2
   sowie
   C)    1-[[2-(2,4-dichlorphenyl)-1,3-dioxolan-2-yl]-methyl]-1H-1,2,4-triazol, 1-[2-(2',4'-dichlorphenyl)-4-propyl-1,3-dioxolan-2-yl]methyl-1H-1,2,4-triazol oder $\alpha$ -[2-(4-chlorphenyl) ethyl]-$\alpha$-(1,1-dimethyl-ethyl)-1H-1,2,4-triazol-1-ethanol,
   und ggf. D) Tris-(N-cyclohexyl-diazeniumdioxi)-aluminium in einem unpolaren und/oder polaren organisch-chemischen Lösemittel oder Lösemittelgemisch, vorzugsweise in einem polaren organisch-chemischen Lösemittel oder Lösemittelgemisch oder in einem Gemisch aus unpolaren und polaren organisch-chemischen Lösemitteln oder in einem Gemisch von Wasser und einem organisch-chemischen Lösemittel oder Lösemittelgemisch, vorzugsweise einem polaren organischen Lösemittel oder Lösemittelgemisch, und mindestens einen Emulgator und/oder Netzmittel gelöst, besteht.

2. Konzentrat zum Schutz von Schnittholz gegen holzverfärbende Pilze nach Anspruch 1, dadurch gekennzeichnet, daß es aus

    30 bis 80 Gew. %, vorzugsweise
    50 bis 60 Gew. %

des Gemisches von

    A)    Cocosdimethylamin und
    B)    2-Ethylhexansäure

in einem Verhältnis von

    8 : 1 bis 1 : 8, vorzugseise
    2 : 1 bis 1 : 2

sowie

    1 bis 10 Gew. %, vorzugsweise
    4 bis 7 Gew. %

    C)    1-[[2-(2,4-dichlorphenyl)-1,3-dioxolan-2-yl]-methyl)-1H-1,2,4-triazol, 1-[2-(2',4'-dichlorphenyl)-4-propyl-1,3-dioxolan-2-yl]methyl-1H-1,2,4-triazol oder $\alpha$ -[2-(4-chlorphenyl) ethyl]-$\alpha$-(1,1-dimethyl-ethyl)-1H-1,2,4-triazol-1-ethanol,

und

    mehr als 9 Gew. %, vorzugsweise
    mehr als 32 Gew. %

eines unpolaren und/oder polaren organischchemischen Lösemittels oder Lösemittelgemisches, vorzugsweise eines polaren organisch-chemischen Lösemittels oder Lösemittelgemisches oder eines Gemisches aus unpolaren und polaren organischchemischen Lösemitteln oder eines Gemisches aus Wasser und einem organisch-chemischen Lösemittel oder Lösemittelgemisch, vorzugsweise einem polaren organischen Lösemittel oder Lösemittelgemisch, und mindestens einem Emulgator und/oder Netzmittel besteht.

3. Mittel zum Schutz von Schnittholz gegen holzverfärbende Pilze nach Anspruch 1, dadurch gekennzeichnet, daß das Mittel (anwendungsfertige Mittel)

    0,7 bis 6 Gew. %, vorzugsweise
    2 bis 5 Gew. %

des Konzentrats, bestehend aus

    30 bis 80 Gew. %, vorzugsweise
    50 bis 60 Gew. %

des Gemisches aus

    A)    Cocosdimethylamin und
    B)    2-Ethylhexansäure

in einem Verhältnis von

    8 : 1 bis 1 : 8, vorzugsweise
    2 : 1 bis 1 : 2

sowie

    1 bis 10 Gew. %, vorzugsweise
    4 bis 7 Gew. %

    C)    1-[[2-(2,4-dichlorphenyl)-1,3-dioxolan-2-yl]methyl]--1H-1,2,4-triazol, 1-[2-(2',4'-dichlorphenyl)-4-propyl-1,3-dioxolan-2-yl]methyl-1H-1,2,4-triazol oder $\alpha$ -[2-(4-chlorphenyl)ethyl]-$\alpha$-(1,1-dimethylethyl)-1H-1,2,4-triazol-1-ethanol

und

    mehr als 9 Gew. %, vorzugsweise
    mehr als 32 Gew. %

eines unpolaren und/oder polaren organischchemischen Lösemittels oder Lösemittelgemisches, vorzugsweise eines polaren organisch-chemischen Lösemittels oder Lösemittelgemisches oder eines Gemisches aus unpolaren und polaren organischchemischen Lösemitteln oder eines Gemisches aus Wasser und einem organisch-chemischen Lösemittel oder Lösemittelgemisch, vorzugsweise einem polaren organischen Lösemittel oder Lösemittelgemisch, und mindestens einem Emulgator und/oder Netzmittel,

sowie

    mehr als 93 Gew. %, vorzugsweise
    mehr als 94 Gew. %

Wasser,

enthält.

4. Mittel oder Konzentrat zum Schutz von Schnittholz gegen holzverfärbende Pilze nach einem oder mehreren der Ansprüche 1 bis 3, dadurch gekennzeichnet, daß als unpolare organisch-chemische Lösemittel Mineralöle oder mineralölhaltige Lösungsmittelgemische, Testbenzin, Petroleum und/oder Alkylbenzol, bevorzugt Aromatenfraktionen der Mineralöle eingesetzt werden.

5. Mittel oder Konzentrat zum Schutz von Schnittholz gegen holzverfärbende Pilze nach einem oder mehreren der Ansprüche 1 bis 3, dadurch gekennzeichnet, daß als polare organisch-chemische Lösemittel Hydroxy-, Ether-, Keto- oder Estergruppen enthaltende Lösemittel, vorzugsweise Cyclohexanon oder Dipropylengly-kolmonomethylether, eingesetzt werden.

6. Mittel oder Konzentrat zum Schutz von Schnittholz gegen holzverfärbende Pilze nach einem oder mehreren der Ansprüche 1 bis 3, dadurch gekennzeichnet, daß als Emulgatoren nichtionogene Emulgatoren oder nichtionogene Emulgatorgemische, vorzugsweise ein eine Seitengruppe enthaltendes ethoxyliertes Nonylphenol eingesetzt werden.

7. Verfahren zum Schutz von Schnittholz gegen holzverfärbende Pilze, dadurch gekennzeichnet, daß auf die Holzoberfläche

   0,7 bis 6 g/m$^2$, vorzugsweise
   2 bis 5 g/m$^2$
   des Mittels oder Konzentrats nach einem oder mehreren der Ansprüche 1 bis 2, 4 bis 6 aufgebracht werden.

## Claims

1. An agent or concentrate for protecting sawn timber against wood-discolouring fungi, characterized in that it consists of a mixture of

   A)    cocosdimethylamine and
   B)    2-ethyl hexanoic acid
   in a ratio of
       8 : 1 to 1 : 8, preferably
       2 : 1 to 1 : 2,
   and also
   C)    1-[[2-(2,4-dichlorophenyl)-1,3-dioxolan-2-yl]-methyl)-1H-1,2,4-triazole,        1-[2-(2',4'-dichlorophenyl)-4-propyl-1,3-dioxolan-2-yl]methyl-1H-1,2,4-triazole  or  α-[2-(4-chlorophenyl)ethyl]-
         α-(1,1-dimethyl-ethyl)-1H-1,2,4-triazole-1-ethanol,
   and optionally D) tris-(N-cyclohexyl-diazeniumdioxi)-aluminium dissolved in a non-polar and/or polar organic-chemical solvent or solvent mixture, preferably in a polar organic-chemical solvent or solvent mixture or in a mixture of non-polar and polar organic-chemical solvents or in a mixture of water and an organic-chemical solvent or solvent mixture, preferably a polar organic solvent or solvent mixture, and at least one emulsifier and/or wetting agent.

2. A concentrate for protecting sawn timber against wood-discolouring fungi according to Claim 1, characterized in that it consists of
       30 to 80% by weight, preferably
       50 to 60% by weight,
   of the mixture of
   A)    cocosdimethylamine and
   B)    2-ethyl hexanoic acid
   in a ratio of
       8 : 1 to 1 : 8, preferably
       2 : 1 to 1 : 2,
   and also
       1 to 10% by weight, preferably
       4 to 7% by weight,
   C)    1-[[2-(2,4-dichlorophenyl)-1,3-dioxolan-2-yl]-methyl]-1H-1,2,4-triazole,        1-[2-(2',4'-dichlorophenyl)-4-propyl-1,3-dioxolan-2-yl]methyl-1H-1,2,4-triazole  or  α-[2-(4-chlorophenyl)ethyl]-α-(1,1-dimethyl-ethyl)-1H-1,2,4-triazole-1-ethanol,

and

more than 9% by weight, preferably

more than 32% by weight,

of a non-polar and/or polar organic-chemical solvent or solvent mixture, preferably of a polar organic-chemical solvent or solvent mixture or of a mixture of non-polar and polar organic-chemical solvents or of a mixture of water and an organic-chemical solvent or solvent mixture, preferably a polar organic solvent or solvent mixture, and at least one emulsifier and/or wetting agent.

3.  An agent for protecting sawn timber against wood-discolouring fungi according to Claim 1, characterised in that the agent (agent ready for use) contains

0.7 to 6% by weight, preferably

2 to 5% by weight,

of the concentrate, consisting of

30 to 80% by weight, preferably

50 to 60% by weight,

of the mixture of

A)    cocosdimethylamine and

B)    2-ethyl hexanoic acid

in a ratio of

8 : 1 to 1 : 8, preferably

2 : 1 to 1 : 2,

and also

1 to 10% by weight, preferably

4 to 7% by weight,

C)    1-[[2-(2,4-dichlorophenyl)-1,3-dioxolan-2-yl]-methyl]-1H-1,2,4-triazole, 1-[2-(2',4'-dichlorophenyl)-4-propyl-1,3-dioxolan-2-yl]methyl-1H-1,2,4-triazole or α-[2-(4-chlorophenyl)ethyl]-α-(1,1-dimethyl-ethyl)-1H-1,2,4-triazole-1-ethanol,

and

more than 9% by weight, preferably

more than 32% by weight,

of a non-polar and/or polar organic-chemical solvent or solvent mixture, preferably of a polar organic-chemical solvent or solvent mixture or of a mixture of non-polar and polar organic-chemical solvents or of a mixture of water and an organic-chemical solvent or solvent mixture, preferably a polar organic solvent or solvent mixture, and at least one emulsifier and/or wetting agent,

and

more than 93% by weight, preferably

more than 94% by weight,

water.

4.  An agent or concentrate for protecting sawn timber against wood-discolouring fungi according to one or more of Claims 1 to 3, characterised in that mineral oils or mineral-oil-containing solvent mixtures, white spirit, petroleum and/or alkylbenzene, preferably aromatic fractions of the mineral oils, are used as non-polar organic-chemical solvents.

5.  An agent or concentrate for protecting sawn timber against wood-discolouring fungi according to one or more of Claims 1 to 3, characterised in that solvents containing hydroxy, ether, keto or ester groups, preferably cyclohexanone or dipropylene glycol monomethyl ether are used as polar organic-chemical solvents.

6.  An agent or concentrate for protecting sawn timber against wood-discolouring fungi according to one or more of Claims 1 to 3, characterised in that non-ionogenic emulsifiers or non-ionogenic emulsifier mixtures, preferably an ethoxylated nonylphenol containing a pendant group, are used as emulsifiers.

7.  A method for protecting sawn timber against wood-discolouring fungi, characterised in that

0.7 to 6 g/m$^2$, preferably

2 to 5 g/m$^2$,

of the agent or concentrate according to one or more of Claims 1 to 2, 4 to 6 are applied to the surface

9

EP 0 448 932 B1

of the wood.

**Revendications**

1.  Agent ou concentré pour la protection du bois scié contre les champignons modifiant la couleur du bois, caractérisé en ce qu'il est constitué par un mélange
    A)      de cocodiméthylamine et
    B)      d'acide 2-éthylhexanoïque
    dans un rapport de
            8:1 à 1:8, de préférence de
            2:1 à 1:2
    ainsi que
    C)      de 1-[[2-(2,4-dichlorophényl)-1,3-dioxolane 2-yl]-méthyl]-1H-1,2,4-triazole, de 1-[2-(2',4'-dichlorophényl)-4-propyl-1,   3-dioxolane-2-yl]méthyl-1H-1,2,4-triazole   ou   d'α-[2-(4-chloro-phényl)-éthyl]-α-(1,1-diméthyléthyl)-1H-1,2,4-triazol-1-éthanol, et éventuellement
    D) de tris-(N-cyclohexyl diazéniumdioxy) aluminium dissous dans un solvant ou mélange de solvants chimiques organiques non polaires et/ou polaires, de préférence dans un solvant ou mélange de solvants chimiques organiques polaires ou dans un mélange de solvants chimiques organiques non polaires et polaires ou dans un mélange d'eau et d'un solvant ou mélange de solvants chimiques organiques, de préférence dans un solvant ou mélange de solvants organiques polaires et dans au moins un émulsifiant et/ou un agent mouillant.

2.  Concentré pour la protection du bois scié contre les champignons modifiant la couleur du bois selon la revendication 1, caractérisé en ce qu'il est constitué par
            30 à 80% en poids, de préférence
            50 à 60% en poids
    du mélange
    A)      de cocodiméthylamine et
    B)      d'acide 2-éthylhexanoïque
    dans un rapport de
            8:1 à 1:8, de préférence
            de 2:1 à 1:2
    ainsi que par
            1 à 10% en poids, de préférence de
            4 à 7% en poids
    C)      de 1-[[2-(2,4-dichlorophényl)-1,3-dioxolane 2-yl]-méthyl]-1H-1,2,4-triazole, de 1-[2-(2',4'-dichlorophényl)-4-propyl-1,3-dioxolane-2-yl]méthyl-1H-1,2,4-triazole ou d'α-[2-(4-chlorophényl)éthyl]-α-(1,1-diméthyléthyl)-1H- 1,2,4-triazol-1-éthanol,
    et
            par plus de 9% en poids, de préférence
            par plus de 32% en poids
    d'un solvant ou mélange de solvants chimiques organiques non polaires et/ou polaires, de préférence d'un solvant ou mélange de solvants chimiques organiques polaires ou d'un mélange de solvants chimiques organiques non polaires et polaires ou d'un mélange d'eau et d'un solvant ou mélange de solvants chimiques organiques, de préférence d'un solvant ou mélange de solvants organiques polaires et d'au moins un émulsifiant et/ou un agent mouillant.

3.  Agent pour la protection du bois scié contre les champignons modifiant la couleur du bois, caractérisé en ce que l'agent (agent prêt à l'emploi) contient
            0,7 à 6% en poids, de préférence
            2 à 5% en poids
    du concentré constitué par
            30 à 80% en poids, de préférence
            50 à 60% en poids
    du mélange
    A)      de cocodiméthylamine et
    B)      d'acide 2-éthylhexanoïque
    dans un rapport de

8:1 à 1:8, de préférence
de 2:1 à 1:2
ainsi que
1 à 10% en poids, de préférence de
4 à 7% en poids
C)    de 1-[[2-(2,4-dichlorophényl)-1,3-dioxolane 2-yl]-méthyl]-1H-1,2,4-triazole, de 1-[2-(2',4' -dichlorophényl)-4-propyl-1,3-dioxolane-2-yl] méthyl-1H-1,2,4-triazole ou d'α-[2-(4-chlorophényl)-
éthyl]-α-(1,1-diméthyléthyl)-1H-1,2,4-triazol-1-éthanol,
et
plus de 9% en poids, de préférence
plus de 32% en poids
d'un solvant ou mélange de solvants chimiques organiques non polaires et/ou polaires, de préférence
d'un solvant ou mélange de solvants chimiques organiques polaires ou d'un mélange de solvants
chimiques organiques non polaires et polaires ou d'un mélange d'eau et d'un solvant ou mélange de
solvants chimiques organiques, de préférence d'un solvant ou mélange de solvants organiques polaires
et d'au moins un émulsifiant et/ou un agent mouillant,
ainsi que
plus de 93% en poids, de préférence
plus de 94% en poids d'eau.

4.   Agent ou concentré pour la protection du bois scié contre les champignons modifiant la couleur du bois
selon une ou plusieurs des revendications 1 à 3, caractérisé en ce qu'on met en oeuvre, en tant que
solvants chimiques organiques non polaires, des huiles minérales ou des mélanges de solvants
contenant de l'huile minérale, du white spirit, du pétrole et/ou un alkylbenzène, de préférence des
fractions aromatiques d'huiles minérales.

5.   Agent ou concentré pour la protection du bois scié contre les champignons modifiant la couleur du bois
selon une ou plusieurs des revendications 1 à 3, caractérisé en ce qu'on met en oeuvre, en tant que
solvants chimiques organiques polaires, des solvants contenant des groupes hydroxy, éthers, céto ou
esters, de préférence la cyclohexanone ou l'éther monométhylique du dipropylène-glycol.

6.   Agent ou concentré pour la protection du bois scié contre les champignons modifiant la couleur du bois
selon une ou plusieurs des revendications 1 à 3, caractérisé en ce que des émulsifiants non ioniques
ou des mélanges d'émulsifiants non ioniques, de préférence un nonylphénol éthoxylé contenant un
groupe latéral, sont mis en oeuvre en tant qu'émulsifiants.

7.   Procédé pour la protection du bois scié contre les champignons modifiant la couleur du bois,
caractérisé en ce que
0,7 à 6 g/m², de préférence
2 à 5 g/m²
de l'agent ou du concentré selon une ou plusieurs des revendications 1 à 2, 4 à 6 sont appliqués sur la
surface du bois.